# EUROPÄISCHE PATENTSCHRIFT

(11) **EP 1 837 245 B1**
(45) Veröffentlichungstag und Bekanntmachung des Hinweises auf die Patenterteilung: **21.11.2012**
(21) Anmeldenummer: 07001939.3
(22) Anmeldetag: 30.01.2007
(51) Int. Cl.: B60R 19/34, B60R 19/24

(54) **Stossfängeranordnung**
Bumper assembly
Ensemble pare-chocs

(30) Priorität: 21.03.2006 DE 102006013274
(43) Veröffentlichungstag der Anmeldung: 26.09.2007
(73) Patentinhaber: Benteler Automobiltechnik GmbH, 33102 Paderborn (DE)
(72) Erfinder: Arns, Wilhelm, Dr., 33102 Paderborn (DE)
(74) Vertreter: Griepenstroh, Jörg

(56) Entgegenhaltungen:
- EP-A- 1 342 625
- EP-A- 1 510 411
- EP-A- 1 837 246
- SE-L- 0 502 105
- US-A1- 2005 099 027

## Beschreibung

Die Erfindung betrifft eine Stoßfängeranordnung für den Front- oder Heckbereich eines Kraftfahrzeugs gemäß den Merkmalen im Oberbegriff des Patentanspruchs 1.

Stoßfängersysteme sind dafür vorgesehen, bei einem Zusammenstoß mit einem Verkehrsteilnehmer oder bei einer Kollision mit einem Hindernis Anprallenergie aufzunehmen und in Verformungsarbeit umzuwandeln. Auf diese Weise sollen Schäden von anderen Kraftfahrzeugkomponenten, insbesondere von der Karosserie, ferngehalten und damit die Schadenshöhe begrenzt werden. Eine weitere wesentliche Funktion von Stoßfängeranordnungen ist es, zur Aussteifung der Karosserie des Kraftfahrzeugs beizutragen.

Da eine Stoßfängeranordnung zudem ein möglichst geringes Gewicht haben soll, handelt es sich um gegensätzliche Anforderungen, welche in komplexen Konstruktionen münden, die wiederum oftmals einen Kompromiss darstellen und nicht jeder Teilaufgabe in vollem Umfang gerecht werden.

Aus der EP 1 342 625 A1 ist eine Stoßstange mit Halterungen bekannt, wobei die Halterungen aus einem einstückigen Hohlprofil gebildet sind. Das Hohlprofil weist einen aus dessen Längsachse gebogenen Krümmungsabschnitt zum Anschluss an den Stoßstangenquerträger auf. Im Anbindungsbereich weist das umgeformte Hohlprofil einen rinnenartigen Querschnitt auf, so dass die sich in Hochrichtung erstreckenden Bolzen durch die Flanken des rinnenartigen Querschnitts ragen, um so den Stoßfängerquerträger an der Halterung zu fixieren.

Durch die US 2005/0099027 A1 zählt eine zweischalige Halterung für Stoßfängeranordnungen zum Stand der Technik. Die Halterung ist als Hohlkörper konfiguriert und weist seitliche Überlappungsbereiche auf, in welchen die Blechschalen des Hohlkörpers miteinander verbunden sind. Auch diese Halterung ist über sich in Hochrichtung des Kraftfahrzeugs erstreckende Bolzenverbindungen mit dem Stoßfängerquerträger verbunden.

Der Erfindung liegt daher die Aufgabe zugrunde, eine Stoßfängeranordnung gemäß den Merkmalen im Oberbegriff des Patentanspruchs 1 dahingehend weiterzubilden, dass bei möglichst geringem Gewicht eine hohe Steifigkeit im Anbindungsbereich zwischen der Crashbox und einem Stoßfängerquerträger gewährleistet ist. Gleichzeitig soll die Lösung mit fertigungstechnisch geringem Aufwand realisiert werden können.

Diese Aufgabe wird gelöst durch eine Stoßfängeranordnung mit den in Anspruch 1 angegebenen Merkmalen.

Es wird zur Lösung dieses Problems eine Stoßfängeranordnung für den Front- oder Heckbereich eines Kraftfahrzeugs vorgeschlagen, mit einem Stoßfängerquerträger, der lösbar über wenigstens jeweils eine sich in Hochrichtung des Kraftfahrzeugs erstreckende Bolzenverbindung an endseitig von Längsträgern angeordneten Crashboxen befestigt ist. Jede Crashbox ist dabei ein Hohlkörper, der aus zwei in seinem Überlappungsbereich zumindest abschnittsweise stoffschlüssig miteinander verbundenen Blechschalen zusammengesetzt ist. Erfindungswesentlich ist, dass die Bolzenverbindungen im Überlappungsbereich der Crashboxen angeordnet sind. Dabei kann es sich um nur eine oder auch um mehrere Bolzenverbindungen je Crashbox handeln. Eine Bolzenverbindung kann durch einen einzelnen, hinreichend langen Bolzen realisiert sein, der beide Überlappungsbereiche durchsetzt. Es ist aber auch möglich, dass ein langer Bolzen durch zwei kleinere Bolzen ersetzt wird, so dass jede Bolzenverbindung zwei Bolzen umfasst.

Die Breite des Überlappungsbereichs ist am stoßfängerquerträgerseitigen Ende mindestens doppelt so groß sein wie die Breite am längsträgerseitigen Ende. Diese relativ starken Breitenänderungen sollen einen möglichst gleichmäßigen Spannungsverlauf und eine optimale Krafteinleitung in die als Hohlkörper ausgebildete Crashbox ermöglichen.

Wesentlich bei der Erfindung ist ferner, dass der Anbindungsbereich zwischen der Crashbox und dem Stoßfängerquerträger, das heißt derjenige Bereich, der von den

Bolzen durchsetzt ist, eine Überlappung, das heißt eine Materialdopplung aufweist. Die Materialdopplung führt dazu, dass die von den Bolzen in die Crashboxen eingeleiteten Anprallkräfte über die Lochleibung unmittelbar und gleichzeitig in beide Blechschalen eingeleitet werden. Das hat den Vorteil, dass die Last sich in dem von den Bolzen durchsetzten Bereich auf beide Blechschalen verteilt und so eine Verformung der Blechschalen erst bei deutlich höherer Kraft eintritt.

Darüber hinaus führt die Materialverdopplung natürlich zu einer Herabsetzung des Leibungsdrucks der Bohrungen im Überlappungsbereich.

Mit der Erfindung ist es möglich, Crashboxen aus relativ dünnwandigen Blechen herzustellen, die allerdings in ihrem Anbindungsbereich an den Stoßfängerquerträger durch Überlappung eine hinreichende Wanddicke besitzen, um die dort punktuell eingeleiteten Spannungen in den weiteren Verlauf der Crashbox einzuleiten. Eine solche Crashbox ist mit geringem fertigungstechnischem Aufwand realisierbar, besitzt ein geringeres Gewicht und gleichzeitig eine hohe Steifigkeit im Anbindungsbereich des Stoßfängerquerträgers.

Die erfindungsgemäße Ausgestaltung der Crashbox ist auch dann von Vorteil, wenn bei einem Crash mit geringer Überdeckung die dem Crash abgewandte Crashbox ein Teil der Anprallkräfte über den angeschlossenen Stoßfängerquerträger aufnehmen muss, diese Kräfte aber möglichst nicht zur Beschädigung der Crashbox führen sollen. In diesem Fall ist es wichtig, dass die Anbindungsbereiche zwischen dem Stoßfängerquerträger und der Crashbox nicht beschädigt werden. Auch dies kann durch Reduzierung der Lochleibung erzielt werden, resultierend aus der Materialverdopplung im Überlappungsbereich.

Die quer zur Fahrtrichtung gemessene Breite der Überlappungsbereiche variiert über die Längserstreckung der Crashbox. Der Überlappungsbereich der Blechschalen nimmt vorzugsweise von dem längsträgerseitigen Ende in Richtung zum stoßfängerquerträgerseitigen Ende in der Breite zu.

Vorteilhafte Ausgestaltungen des Erfindungsgedankens sind Gegenstand der Unteransprüche.

Grundsätzlich ist es denkbar, dass kurze Bolzen einer Bolzenverbindung jeweils nur einen Überlappungsbereich der Crashbox durchsetzen. Günstiger ist es, wenn ein hinreichend langer Bolzen einer Bolzenverbindung sich gegenüberliegende Überlappungsbereiche einer Crashbox durchsetzen, da hierdurch eine gleichmäßigere Krafteinleitung in die Crashbox erzielt wird und die Lochleibung im gesamten Anbindungsbereich gleich ist.

Die Überlappungsbereiche sind vorzugsweise als sich gegenüber liegende Flansche ausgebildet, die einen Anbindungsbereich des Stoßfängerquerträgers umgreifen. Derartige Flansche sind durch einen geeigneten Blechzuschnitt vor der Umformung des Blechzuschnitts zu den Blechschalen leicht herstellbar. Vorzugsweise überlappen sich die Blechschalen im Bereich der Flansche vollständig. Dadurch ergibt sich für beide Blechschalen im Bereich der Flansche ein weitestgehend gleicher Spannungsverlauf.

Üblicherweise ist die Breite des Überlappungsbereichs bei einer Crashbox über seine gesamte Länge im Wesentlichen konstant. Dies kann auch bei der erfindungsgemäßen Crashbox bereichsweise der Fall sein, so dass die Breite des Überlappungsbereichs in einem dem Längsträger benachbarten ersten Längenabschnitt konstant ist und in einem sich daran in Richtung zum Stoßfängerquerträger anschließenden Übergangsabschnitt kontinuierlich bis auf die Breite der Flansche zunimmt. Hierbei kann der erste Längenabschnitt länger als der Übergangsabschnitt sein. Dadurch ist die Breitenänderung im kürzeren Übergangsabschnitt relativ groß.

Die Blechschalen sind insbesondere durch Schweißverfahren miteinander verbunden, wie z.B. Punktschweißen, Rollnahtschweißen oder Laserschweißen. Als vorteilhaft wird es angesehen, wenn diese stoffschlüssige Fügeverbindung zwischen den Blechschalen sich in Längsrichtung der Crashbox durchgehend oder mit Unterbrechungen entlang einer Geraden erstreckt. Eine gradlinige Schweißverbindung ist wesentlich einfacher herzustellen als eine flächige Schweißverbindung. Bei einer gradlinigen Schweißverbindung mit Unterbrechungen kann es sich um aneinander gereihte Punktschweißungen handeln. Durchgehende Fügeverbindungen sind z.B. durch Rollnahtschweißen oder Laserschweißen herzustellen.

Der Verlauf der Geraden ist durch die Lage der Überlappungsbereiche bestimmt. Als zweckmäßig wird es angesehen, wenn sich die Gerade bis in die Flansche erstreckt und dort zwischen zwei parallel zueinander angeordneten Bolzenverbindungen verläuft, so dass je eine Bolzenverbindung auf einer Seite der Geraden angeordnet ist. Eine stoffschlüssige Verbindung der Flansche nur im Bereich der Geraden reicht aus, wenn die Bolzenverbindung einen ausreichenden Zusammenhalt des übrigen Überlappungsbereichs gewährleistet. Da die Bolzenverbindung in der Regel die Flansche gegen den Stoßfängerquerträger verspannen, liegen die Überlappungsbereiche fest an dem Anbindungsbereich des Stoßfängerquerträgers an, so dass eine vollflächige beispielsweise randseitige Verschweißung der Flansche entbehrlich ist.

Die Erfindung wird nachfolgend anhand eines in den Zeichnungen dargestellten Ausführungsbeispiels näher erläutert. Es zeigen:
- Figur 1: eine Stoßfängeranordnung in der Draufsicht;
- Figur 2: eine perspektivische Darstellung einer Crashbox in Blickrichtung von schräg hinten;
- Figur 3: einen vertikalen Längsschnitt durch die Crashbox der Figur 2 in perspektivischer Ansicht.

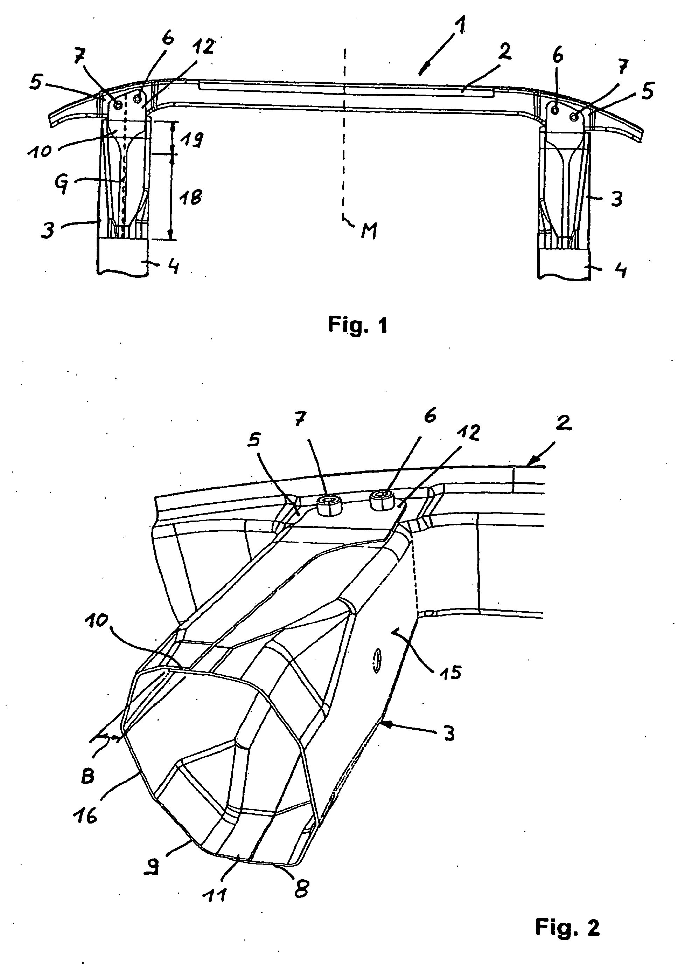

Figur 1 zeigt in der Draufsicht von oben eine Stoßfängeranordnung 1 für den Front- oder Heckbereich eines nicht näher dargestellten Kraftfahrzeugs. Die Stoßfängeranordnung 1 umfasst einen Stoßfängerquerträger 2, der an Crashboxen 3 befestigt ist. Die Crashboxen 3 befinden sich endseitig von Längsträgern 4 des Kraftfahrzeugs. Die Längsträger 4 sind nur andeutungsweise eingezeichnet, da sie für die nachfolgende Erläuterung des Erfindungsgedankens eine untergeordnete Rolle spielen.

Wie anhand der Figuren 1 bis 3 zu erkennen ist, ist der Stoßfängerquerträger 2 in seinen Anbindungsbereichen 5 an die Crashboxen 3 über Bolzenverbindungen mit jeweils zwei sich in Hochrichtung erstreckende Bolzen 6, 7 mit der jeweiligen Crashbox 3 verbunden. Die Hochrichtung des Kraftfahrzeugs entspricht in diesem Fall der Senkrechten zur Bildebene der Figur 1. Die Bolzen 6, 7 sind quer zur Fahrtrichtung nebeneinander angeordnet, wobei der einer Fahrzeugmittellängsebene M zugewandte Bolzen 6 in Fahrtrichtung gesehen etwas weiter vorne liegt als der äußere Bolzen 7.

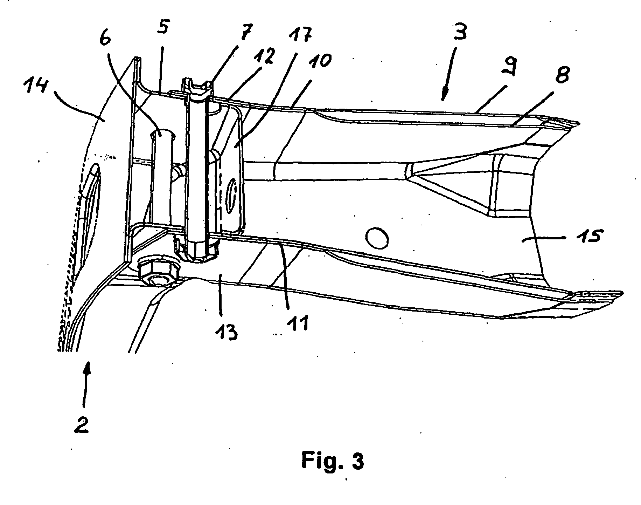

Die Crashboxen 3 sind bezüglich der Mittellängsebene M spiegelsymmetrisch ausgebildet, wobei nachfolgend die Konfiguration der Crashbox anhand der Figuren 2 und 3 bezüglich der in der Bildebene linken Crashbox erläutert wird.

Figur 2 zeigt die Crashbox 3 in perspektivischer Darstellung. Es ist zu erkennen, dass die Crashbox 3 aus zwei Blechschalen 8, 9 zusammengesetzt ist, die einen Hohlkörper bilden. Die Blechschalen 8, 9 überlappen sich in ihren vertikal übereinander liegenden Überlappungsbereichen 10, 11 und sind entlang der in Figur 1 eingezeichneten Geraden G miteinander verschweißt. Die Gerade G verläuft in diesem Ausführungsbeispiel zwischen den beiden Bolzen 6, 7, wobei jeweils ein Bolzen 6, 7 auf einer Seite der Geraden G angeordnet ist.

Die Gerade G erstreckt sich über die gesamte Länge der Crashbox 3, das heißt sowohl über denjenigen Bereich, der als Hohlkörper ausgebildet ist als auch in sich stoßfängerseitig an den Hohlkörper anschließende vertikal gegenüber liegende Flansche 12, 13, die durch vollständige Überlappung der Blechschalen 8, 9 ausgebildet sind. Dies geht aus der Schnittdarstellung in Figur 3 hervor. Dort ist zu erkennen, dass die Bolzen 6, 7 die sich gegenüberliegenden Überlappungsbereiche 10, 11 bzw. die Flansche 12, 13, die Bestandteil der Überlappungsbereiche 10, 11 1 sind, unter Eingliederung des Anbindungsbereichs 5 des Stoßfängerquerträgers 2 vollständig durchsetzen.

Bei den Bolzen 6, 7 handelt es sich um Schraubbolzen, welche die Flansche 12, 13 von oben und unten gegen den Anbindungsbereich 5 des Stoßfängerquerträgers 2 pressen. Die Klemmkräfte der Verschraubung werden von dem kastenförmig profilierten Stoßfängerquerträger 2 aufgefangen, der als durch ein Schließblech 14 verschlossenes, U-förmig konfiguriertes Profil ausgebildet ist.

Die Abstützung des Stoßfängerquerträgers 2 an der Crashbox 3 erfolgt einerseits über die Bolzen 6, 7, andererseits aber auch durch die Seitenwände 15, 16, die bei Stauchung an dem U-Profil 17 des Stoßfängerquerträgers 2 zur Anlage gelangen.

Insbesondere anhand von Figur 2 ist zu erkennen, dass die quer zur Fahrtrichtung gemessene Breite B der Überlappungsbereiche 10, 11 in Längsrichtung der Crashboxen 3 variiert. Die Breite B nimmt in Richtung des Stoßfängerquerträgers 2, das heißt in Richtung der Flansche 12, 13 zu und ist dort maximal. In diesem Ausführungsbeispiel ist die Breite B über einem dem Längsträger 4 benachbarten ersten Längenabschnitt 18 konstant und relativ gering (Figur 1). Erst in einem sich an den ersten Längenabschnitt 18 anschließenden Übergangsabschnitt 19 nimmt die Breite B bis auf die maximale Breite der Flansche 12, 13 zu, wo die Breite B dann konstant ist. Der Übergangsabschnitt 19 ist kürzer als der erste Längenabschnitt 18. In diesem Ausführungsbeispiel ist der erste Längenabschnitt 18 etwa dreimal so lang wie der Übergangsabschnitt 19.

Die Breite B ändert sich in dem Übergangsabschnitt 19 nicht sprunghaft, sondern nimmt kontinuierlich zu. Die der Mittellängsebene M des Kraftfahrzeugs zugewandte Seite des Überlappungsbereichs 10 ist im Übergangsabschnitt konkav gekrümmt. Hier wird die maximale Breite früher erreicht als beim außen liegenden Rand des Überlappungsabschnitts, der zunächst in seinem Verlauf konkav und dann konvex gekrümmt ist, bis schließlich die maximale Breite am Ende des Hohlkörpers erreicht ist. Insgesamt hat der Überlappungsbereich 10, 11 dadurch eine Kontur, die in gewisser Weise einem Löffel ähnelt, wobei der erste Längenabschnitt 18 den Schaft bildet, dessen Breite B im Übergangsabschnitt 19 zunimmt und schließlich in den Löffelabschnitt bzw. in den Flansch 12, 13 mündet.

### Bezugszeichen:

- 1-: Stoßfängeranordnung
- 2-: Stoßfängerquerträger
- 3-: Crashbox
- 4-: Längsträger
- 5-: Anbindungsbereich v. 2
- 6-: Bolzen
- 7-: Bolzen
- 8-: Blechschale
- 9-: Blechschale
- 10-: Überlappungsbereich
- 11-: Überlappungsbereich
- 12-: Flansch
- 13-: Flansch
- 14-: Schließblech
- 15-: Seitenwand v. 3
- 16-: Seitenwand v. 3
- 17-: U-Profil v. 2
- 18-: erster Längenabschnitt v. 3
- 19-: Übergangsabschnitt v. 3

- B-: Breite v. 10, 11
- G-: Gerade
- M-: Mittellängsebene

## Patentansprüche

1. Stoßfängeranordnung für den Front- oder Heckbereich eines Kraftfahrzeugs mit einem Stoßfängerquerträger (2), der lösbar über wenigstens jeweils einen sich in Hochrichtung des Kraftfahrzeugs erstreckende Bolzen (6, 7) einer Bolzenverbindung an endseitig von Längsträgern (4) angeordneten Crashboxen (3) befestigt ist, wobei jede Crashbox (3) ein Hohlkörper ist, der einen Überlappungsbereich (10, 11) aufweist, wobei die Bolzen (6, 7) im Überlappungsbereich (10, 11) der Crashboxen (3) angeordnet sind, **dadurch gekennzeichnet, dass** der Hohlkörper aus zwei in seinen Überlappungsbereich (10, 11) zumindest abschnittsweise stoffschlüssig miteinander verbundenen Blechschalen (8, 9) zusammengesetzt ist, wobei die quer zur Fahrtrichtung gemessene Breite (B) der Überlappungsbereiche (10, 11) der Blechschalen (8, 9) von dem längsträgerseitigen Ende zunimmt, wobei die Breite (B) am stoßfängerquerträgerseitigen Ende mindestens doppelt so groß ist wie die Breite (B) am längsträgerseitigen Ende.

2. Stoßfängeranordnung nach Anspruch 1, **dadurch gekennzeichnet, dass** die Bolzen (6, 7) sich gegenüberliegende Überlappungsbereiche (10, 11) einer Crashbox (3) durchsetzen.

3. Stoßfängeranordnung nach Anspruch 1 oder 2, **dadurch gekennzeichnet, dass** die Überlappungbereiche (10, 11) als sich gegenüberliegende Flansche (12, 13) ausgebildet sind, die einen Anbindungsbereich (5) des Stoßfängerquerträgers (2) umgreifen.

4. Stoßfängeranordnung nach Anspruch 3, **dadurch gekennzeichnet, dass** sich die Blechschalen (8, 9) im Bereich der Flansche (12, 13) überlappen.

5. Stoßfängeranordnung nach Anspruch 1 oder 4, **dadurch gekennzeichnet, dass** die Breite (B) des Überlappungsbereichs (10, 11) in einem dem Längsträger (4) benachbarten ersten Längenabschnitt (18) konstant ist und in einem sich daran in Richtung zum Stoßfängerquerträger (2) anschließenden Übergangsabschnitt (19) kontinuierlich bis auf die Breite (B) der Flansche (12, 13) zunimmt.

6. Stoßfängeranordnung nach Anspruch 1, **dadurch gekennzeichnet, dass** der erste Längenabschnitt (18) länger als der Übergangsabschnitt (19) ist.

7. Stoßfängeranordnung nach einem der Ansprüche 1 bis 6, **dadurch gekennzeichnet, dass** die Blechschalen (8, 9) durchgehend oder mit Unterbrechungen entlang einer Geraden (G) stoffschlüssig verbunden sind, wobei sich die Gerade (G) in Längsrichtung der Crashbox (3) erstreckt.

8. Stoßfängeranordnung nach Anspruch 7, **dadurch gekennzeichnet, dass** die Gerade (G) sich bis in die Flansche (12, 13) erstreckt und dort zwischen zwei im Abstand zueinander angeordneten Bolzen (6, 7) verläuft, so dass je ein Bolzen (6, 7) auf einer Seite der Geraden (G) angeordnet ist.

## Claims

1. Bumper assembly for the front or rear of a motor vehicle with a bumper cross beam (2) which is releasably attached via at least one bolt (6, 7), extending in the height direction of the motor vehicle, of a bolt connection to crash boxes (3) which are arranged at the ends of longitudinal chassis beams (4), wherein each crash box (3) is a hollow body which comprises an overlap region (10, 11), wherein the bolts (6, 7) are arranged in the overlap region (10, 11) of the crash boxes (3), **characterised in that** the hollow body is composed of two steel frames (8, 9) connected together at least in segments by material fit, wherein the width (B), measured transverse to the vehicle direction, of the overlap regions (10, 11) of the steel frames (8, 9) increases from the longitudinal chassis beam side end, wherein the width (B) at the bumper cross beam side end is at least twice as large as the width (B) at the longitudinal chassis beam side end.

2. Bumper assembly according to claim 1, **characterised in that** the bolts (6, 7) pass through opposite overlap regions (10, 11) of a crash box (3).

3. Bumper assembly according to claim 1 or 2, **characterised in that** the overlap regions (10, 11) are formed as opposite flanges (12, 13) which surround a connecting region (5) of the bumper cross beam (2).

4. Bumper assembly according to claim 3, **characterised in that** the steel frames (8, 9) overlap in the region of the flanges (12, 13).

5. Bumper assembly according to claim 1 or 4, **characterised in that** the width (B) of the overlap region (10, 11) is constant in a first longitudinal segment (18) adjacent to the longitudinal chassis beam (4) and then increases continuously in the direction towards the bumper cross beam (2) up to the width (B) of the flanges (12, 13).

6. Bumper assembly according to claim 1, **characterised in that** the first longitudinal segment (18) is longer than the transition segment (19).

7. Bumper assembly according to any of claims 1 to 6, **characterised in that** the steel frames (8, 9) are connected continuously or with interruptions by material fit along a straight line (G), wherein the straight line (G) extends in the longitudinal direction of the crash box (3).

8. Bumper assembly according to claim 7, **characterised in that** the straight line (G) extends up to the flanges (12, 13) and there runs between two bolts (6, 7) arranged spaced apart so that one bolt (6, 7) is arranged on each side of the straight line (G).

## Revendications

1. Ensemble pare-chocs destiné à la région antérieure ou postérieure d'un véhicule automobile, comprenant une traverse (2) de pare-chocs qui est fixée de manière amovible, par l'intermédiaire d'au moins un boulon respectif (6, 7) d'une liaison par boulonnage, s'étendant dans le sens de la hauteur du véhicule automobile, à des caissons de déformation (3) situés aux extrémités de longerons (4), chaque caisson de déformation (3) étant un corps creux muni d'une zone de chevauchement (10, 11), les boulons (6, 7) étant disposés dans la zone de chevauchement (10, 11) des caissons de déformation (3), **caractérisé en ce que** le corps creux est composé de deux coques en tôle (8, 9) reliées l'une à l'autre, au moins par portions, par liaison de matière dans sa zone de chevauchement (10, 11), dans lequel la largeur (B) des zones de chevauchement (10, 11) desdites coques en tôle (8, 9), mesurée transversalement par rapport à la direction de déplacement, croît à partir de l'extrémité située du côté des longerons, ladite largeur (B) étant à l'extrémité située du côté de la traverse de pare-chocs au moins le double de la largeur (B) à ladite extrémité située du côté des longerons.

2. Ensemble pare-chocs selon la revendication 1, **caractérisé en ce que** les boulons (6, 7) traversent des zones de chevauchement (10, 11) d'un caisson de déformation (3) qui sont disposées en vis-à-vis.

3. Ensemble pare-chocs selon la revendication 1 ou 2, **caractérisé en ce que** les zones de chevauchement (10, 11) sont réalisées sous la forme d'ailes (12, 13) disposées en vis-à-vis, qui entourent une zone (5) de rattachement de la traverse (2) de pare-chocs.

4. Ensemble pare-chocs selon la revendication 3, **caractérisé en ce que** les coques en tôle (8, 9) se chevauchent dans la région des ailes (12, 13).

5. Ensemble pare-chocs selon la revendication 1 ou 4, **caractérisé en ce que** la largeur (B) de la zone de chevauchement (10, 11) est constante sur un premier tronçon de longueur (18) voisin du longeron (4), et croît continûment, jusqu'à la largeur (B) des ailes (12, 13), dans une zone de transition (19) située dans la continuité dudit tronçon en direction de la traverse (2) de pare-chocs.

6. Ensemble pare-chocs selon la revendication 1, **caractérisé en ce que** le premier tronçon de longueur (18) est plus long que la zone de transition (19).

7. Ensemble pare-chocs selon l'une des revendications 1 à 6, **caractérisé en ce que** les coques en tôle (8, 9) sont reliées par liaison de matière le long d'une ligne droite (G), de manière continue ou avec discontinuités, ladite ligne droite (G) s'étendant dans la direction longitudinale du caisson de déformation (3).

8. Ensemble pare-chocs selon la revendication 7, **caractérisé en ce que** la ligne droite (G) s'étend jusque dans les ailes (12, 13), au niveau desquelles son tracé passe entre deux boulons (6, 7) espacés l'un de l'autre, de sorte qu'un boulon (6, 7) respectif se trouve d'un côté de ladite ligne droite (G).
